# EUROPEAN PATENT SPECIFICATION

(11) **EP 1 236 775 B1**
(45) Date of publication and mention of the grant of the patent: **12.05.2004**
(21) Application number: 02004251.1
(22) Date of filing: 26.02.2002
(51) Int. Cl.: C09D 5/10

(54) **Metal sheet with anticorrosive coating**
Blech mit einer Korrosionsschutzbeschichtung
Feuille métallique avec un revêtement anticorrosive

(30) Priority: 02.03.2001 JP 2001058040
(43) Date of publication of application: 04.09.2002
(73) Proprietor: KABUSHIKI KAISHA KOBE SEIKO SHO, Kobe-Shi, Hyogo-ken 651-0072 (JP)
(72) Inventor: Yamamoto, Takayuki, Kakogawa-shi, Hyogo 675-0137 (JP); Shige, Hiroo, Kakogawa-shi, Hyogo 675-0137 (JP); Watase, Takeshi, Kakogawa-shi, Hyogo 675-0137 (JP); Shimizu, Masafumi, Kakogawa-shi, Hyogo 675-0137 (JP)
(74) Representative: Müller-Boré & Partner Patentanwälte

(56) References cited:
- EP-A- 0 335 350
- EP-A- 0 722 993
- GB-A- 971 475
- US-A- 3 976 617
- US-A- 4 040 842

## Description

The present invention relates to a metal sheet with anticorrosive coating formed from an anticorrosive paint extremely effective in corrosion prevention. The metal sheet according to the present invention will find use in various areas including domestic electric appliances as well as automobiles and building and construction.

It is common practice to make parts of automobiles and domestic electric appliances from a zinc-coated steel sheet produced by zinc electroplating or zinc hot dip galvanizing. For better corrosion resistance, zinc coating may be followed by conversion treatment, such as chromating and phosphating.

Chromating, however, suffers the disadvantage of requiring a solution containing a toxic metal (such as chromium) or its ion. This solution is liable to cause soil and groundwater pollution, and complete exemption from its injurious action is almost impossible.

For this reason, there have been proposed other surface treating methods than chromating, such as those which employ any of zinc phosphate, zinc fluoride, zirconium, titania, and silane coupling agent. These methods, however, do not form a coating film with sufficient corrosion resistance, particularly, pitting corrosion resistance. They need further improvement.

US-A-4 040 842 discloses a rust preventive coating composition applied to a metal substrate comprising, a zinc powder and a metal salt based on magnesium or barium.
EP-A-0 335 350 discloses a rust preventive coating composition comprising, a zinc powder and a metal salt based on aluminum, calcium or barium.

It is an object of the present invention to provide a metal sheet with anticorrosive coating which exhibits good corrosion resistance as well as good pitting corrosion resistance.

The present invention is directed to a metal sheet with anticorrosive coating formed from an anticorrosive paint on at least one side thereof, wherein said anticorrosive paint contains a metallic zinc powder and at least one kind of metal salt rust inhibitor, said metal salt being a salt of a metal which is more base than zinc.

The metal sheet with anticorrosive coating specified above exhibits good corrosion resistance as well as pitting corrosion resistance. Therefore, it is suitable not only for indoor use (such as furniture and domestic electric appliances) but also for outdoor use (such as automobiles and building and construction).

In its preferred embodiment, the metal sheet with anticorrosive coating is characterized in that the substrate is a steel sheet.

In its preferred embodiment, the metal sheet with anticorrosive coating is characterized in that the coating film has a thickness ranging from 5 µm to 30 µm. This thickness is adequate for good corrosion resistance.

In its preferred embodiment, the metal sheet with anticorrosive coating is characterized in that the metallic zinc powder has an average particle diameter ranging from 0.01 µm to 20 µm.

In its preferred embodiment, the metal sheet with anticorrosive coating is characterized in that the anticorrosive paint contains the metallic zinc powder in an amount of 40-95 weight% of its solids and contains the metal salt rust inhibitor in an amount of 1-30 weight% of its solids, with the total amount of the two components being 41-96 mass%.

The metal sheet with anticorrosive coating is characterized in that the metal salt rust inhibitor is a fine powder having an average particle diameter not larger than 1 µm. Meeting this requirement produces a high rust preventing effect.

In its preferred embodiment, the metal sheet with anticorrosive coating is characterized in that the metal salt rust inhibitor is a phosphate or a phosphomolybdate.

In its preferred embodiment, the metal sheet with anticorrosive coating is characterized in that a phosphate coating film is interposed between the metal sheet and the coating film of the anticorrosive paint. The phosphate coating film has a coating weight ranging from 0.05 g/m² to 3.0 g/m².

According to the present invention, the metal sheet with anticorrosive coating is characterized in that the anticorrosive coating is formed from an anticorrosive paint which contains a metallic zinc powder and at least one kind of metal salt rust inhibitor, said metal salt being a salt of a metal which is more base than zinc. Corrosion prevention by zinc has long been known, and metal salt rust inhibitors are also known. However, the present inventors are the first to find that a marked anticorrosive effect is produced by combination of zinc powder with a metal salt rust inhibitor, said metal salt being a salt of a metal which is more base than zinc. The mechanism of the two components producing such a marked anticorrosive effect is not yet elucidated. Probably, it is due to a mutual action between them.

The zinc powder should preferably be one which has an average particle diameter ranging from 0.01 µm to 20 µm. For its good anticorrosive effect, the zinc powder should be contained in an amount of 40-95 weight% of solids (non-volatile matter) in the anticorrosive paint.

The metal salt rust inhibitor may be derived from any metal which is more base than zinc. Examples of such a metal include magnesium, aluminum, calcium, and barium. The metal salt may be in the form of phosphate, phosphomolybdate, molybdate, and metaborate. Typical examples of the metal salt rust inhibitor include magnesium phosphate, aluminum phosphomolybdate, calcium phosphate, calcium molybdate, and barium metaborate. They may be used alone or in combination with one another.

The metal salt rust inhibitor should have an average particle diameter not larger than 1 µm. It fully produces its effect when it is in the form of fine powder. Incidentally, the above-mentioned average particle diameter may be applied to primary particles as well as secondary particles resulting from aggregation.

For its good anticorrosive effect, the metal salt rust inhibitor should be contained in an amount of 1-30 mass% of solids in the anticorrosive paint. Incidentally, the total amount of the zinc powder and the metal salt rust inhibitor should preferably be 41-96 weight%. With an amount less than 41 mass%, they do not produce the desired effect. With an amount in excess of 96 weight%, they limit the amount of binder resin necessary for uniform coating film.

The anticorrosive paint should contain any known binder resin (as a film-forming component), such as epoxy resin, acrylic resin, urethane resin, polyester resin, phenolic resin, alkyd resin, and melamine resin. These resins may be used in combination with any known hardener. The anticorrosive paint may be used in any form such as solution, powder, aqueous emulsion, aqueous dispersion, and electrodeposition paint.

The anticorrosive paint may be incorporated with any known paint additive, such as pigment, coupling agent, leveling agent, sensitizing agent, thickening agent, antioxidant, UV stabilizer, and flame retardant.

The metal sheet is not specifically restricted. It includes, for example, steel sheet, galvanized steel sheet, plated steel sheet, aluminum sheet, aluminum alloy sheet, and titanium sheet.

The metal sheet with anticorrosive coating which is covered by the present invention exhibits sufficient corrosion resistance owing to the anticorrosive paint applied thereto even though it has no phosphate treatment. However, for better corrosion resistance after coating, it is desirable to previously perform phosphate treatment on the metal sheet surface or the plating surface. The coating weight of phosphate should preferably be in a range of 0.05 to 3.0 g/m². Zinc phosphate is usually used for phosphate treatment. Incidentally, the anticorrosive paint used in the present invention meets requirements for the banning of chromium. Needless to say, the anticorrosive paint may be applied to any chromated metal sheet.

Coating of a metal sheet with the anticorrosive paint may be accomplished by any known method, such as dipping, roll coating, spraying, and curtain flow coating. For good corrosion resistance, the coating thickness should preferably be in a range of 5 µm to 30 µm.

According to the present invention, the metal sheet with anticorrosive coating may have the anticorrosive coating film on one side or both sides of a metal sheet. The anticorrosive coating film may be formed directly on the surface of a metal sheet or indirectly with a phosphate film interposed between them as mentioned above. In addition, the anticorrosive coating film may be further coated with phosphate film, protective layer, coloring layer, etc. according to intended use.

The invention will be described in more detail with reference to the following examples.

### Example 1

Two samples according to the present invention were prepared. The first one is based on a cold rolled sheet (0.8 mm thick) of aluminum killed steel. The second one is based on a commercial cold rolled steel sheet with phosphate treatment. After degreasing, the steel sheet (as a substrate) was coated with an anticorrosive paint of epoxy resin which contains a metal salt rust inhibitor and zinc powder (3-7 µm in particle diameter and 65 mass% in amount). The kind and amount of the metal salt rust inhibitor are shown in Table 1. Coating was followed by curing at about 200°C for 60 seconds. Thus, the metal sheet was coated with an anticorrosive coating film (10 µm thick).

The coated metal sheet was cut into pieces, each measuring 70 mm by 150 mm. With its edge sealed, each specimen underwent salt spray test according to the method of testing automotive materials for corrosion resistance (JASO-M609). This test method consists of spraying with 5% NaCl aqueous solution at 35°C for 2 hours, drying at 60°C for 4 hours, and standing at 50°C and 95% RH for 2 hours. This cycle (taking 8 hours) is repeated three times a day, and the test was continued for 30 days. After the test was completed, the surface of the specimen was cleaned of rust and the cleaned surface was divided into 16 equal sections. Each section was examined for the depth of the maximum pit, and an average for 16 sections was calculated. The specimens were rated as "A", "B", or "C" for pitting corrosion resistance according to the average values -- less than 100 µm, no less than 100 µm and less than 200 µm, and no less than 200 µm.

The specimens which had undergone the salt spray test were also tested for red rust area. The specimens were rated as "A", "B", "C", or "D" according to the area covered by red rust -- less than 10%, no less than 10% and less than 20%, no less than 20% and less than 30%, and no less than 30%.

The coated metal sheet was also cut into pieces, each measuring 70 mm by 150 mm. Each specimen underwent phosphating treatment and cationic electrocoating for automobiles. The coating surface was cut with a cutter knife to make a cross cut (X mark, 80 mm long) reaching the metal substrate. The specimen with a cross cut underwent the above-mentioned salt spray test for 30 days (3 cycles a day). After 30 days, the coating surface was examined for the maximum swell width of the cut (one side). The specimens were rated for corrosion resistance after coating as "A", "B", or "C" according to the maximum swell width -- less than 1.5 mm, no less than 1.5 mm and less than 3.0 mm, and no less than 3.0 mm. Table 1 shows the results of tests for pitting corrosion resistance, red rust resistance, and corrosion resistance after coating.

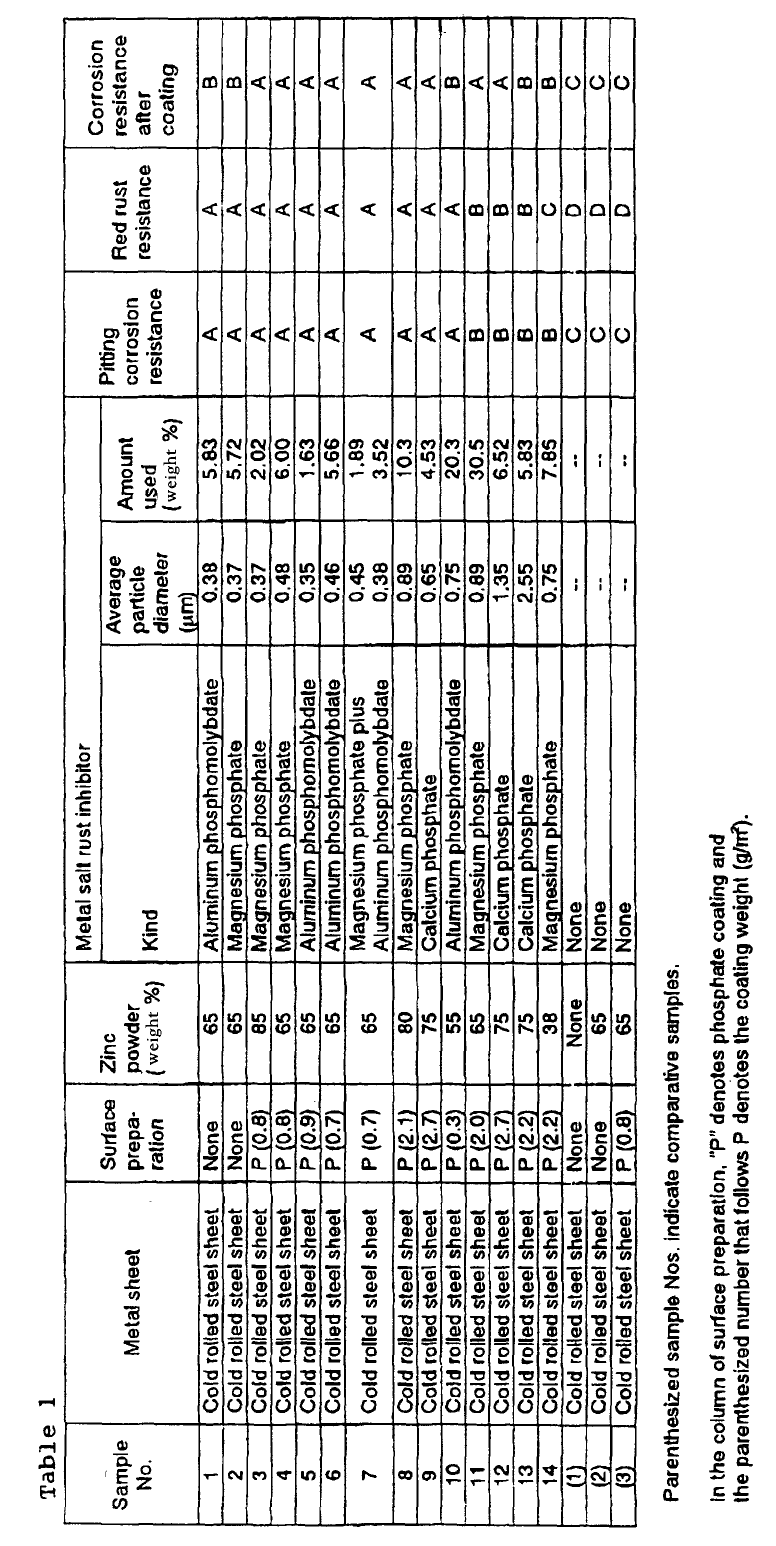

## Claims

1. A metal sheet with anticorrosive coating formed from an anticorrosive paint on at least one side thereof, wherein said anticorrosive paint contains a metallic zinc powder and at least one kind of metal salt rust inhibitor, said metal salt being a salt of a metal, selected from magnesium, aluminum, calcium and barium, wherein the metal salt rust inhibitor is a fine powder having an average particle diameter not larger than 1 µm.

2. The metal sheet with anticorrosive coating as defined in Claim 1, wherein the substrate is a steel sheet.

3. The metal sheet with anticorrosive coating as defined in claim 1 or 2, wherein the coating film has a thickness ranging from 5 µm to 30 µm.

4. The metal sheet with anticorrosive coating as defined in anyone of claims 1 to 3, wherein the metallic zinc powder has an average particle diameter ranging from 0.01 µm to 20 µm.

5. The metal sheet with anticorrosive coating as defined in anyone of claims 1 to 4, wherein the anticorrosive paint contains the metallic zinc powder in an amount of 40-95 weight% of its solids.

6. The metal sheet with anticorrosive coating as defined in anyone of claims 1 to 5, wherein the anticorrosive paint contains the metal salt rust inhibitor in an amount of 1-30 weight% of its solids.

7. The metal sheet with anticorrosive coating as defined in anyone of claims 1 to 6, wherein the metal salt rust inhibitor is a phosphate.

8. The metal sheet with anticorrosive coating as defined in anyone of claims 1 to 6, wherein the metal salt rust inhibitor is a phosphomolybdate.

9. The metal sheet with anticorrosive coating as defined in anyone of claims 1 to 8, wherein a phosphate coating film is interposed between the metal sheet and the coating film of the anticorrosive paint.

## Patentansprüche

1. Metallblech mit Korrosionsschutzbeschichtung, gebildet aus einem Korrosionsanstrich auf mindestens einer Seite davon, wobei der Korrosionsschutzanstrich ein metallisches Zinkpulver und mindestens eine Art eines Metallsalz-Rostinhibitors enthält, wobei das Metallsalz ein Salz eines Metalls, ausgewählt aus Magnesium, Aluminium Calcium und Barium, ist und wobei der Metallsalz-Rostinhibitor ein feines Pulver mit einem durchschnittlichen Teilchendurchmesser von nicht größer als 1 µm ist.

2. Metallblech mit Korrosionsschutzbeschichtung, wie in Anspruch 1 definiert, wobei das Substrat ein Stahlblech ist.

3. Metallblech mit Korrosionsschutzbeschichtung, wie in Anspruch 1 oder 2 definiert, wobei der Beschichtungsfilm eine Dicke im Bereich von 5 µm bis 30 µm aufweist.

4. Metallblech mit Korrosionsschutzbeschichtung, wie in einem der Ansprüche 1 bis 3 definiert, wobei das metallische Zinkpulver einen durchschnittlichen Teilchendurchmesser im Bereich von 0,01 µm bis 20 µm aufweist.

5. Metallblech mit Korrosionsschutzbeschichtung, wie in einem der Ansprüche 1 bis 4 definiert, wobei der Korrosionsschutzanstrich das metallische Zinkpulver in einer Menge von 40 bis 95 Gew.-%, bezogen auf dessen Feststoffe, enthält.

6. Metallblech mit Korrosionsschutzbeschichtung, wie in einem der Ansprüche 1 bis 5 definiert, wobei der Korrosionsschutzanstrich den Metallsalz-Rostinhibitor in einer Menge von 1 bis 30 Gew.-%, bezogen auf dessen Feststoffe, enthält.

7. Metallblech mit Korrosionsschutzbeschichtung, wie in einem der Ansprüche 1 bis 6 definiert, wobei der Metallsalz-Rostinhibitor ein Phosphat ist.

8. Metallblech mit Korrosionsschutzbeschichtung, wie in einem der Ansprüche 1 bis 6 definiert, wobei der Metallsalz-Rostinhibitor ein Phosphomolybdat ist.

9. Metallblech mit Korrosionsschutzbeschichtung, wie in einem der Ansprüche 1 bis 8 definiert, wobei ein Phosphat-Beschichtungsfilm zwischen das Metallblech und den Beschichtungsfilm des Korrosionsschutzanstrichs gelegt ist.

## Revendications

1. Feuille métallique avec un revêtement anticorrosif formé à partir d'une peinture anticorrosive sur au moins un côté de celle-ci, dans laquelle ladite peinture anticorrosive contient une poudre métallique de zinc et au moins un type de produit antirouille à base d'un sel métallique, ledit sel métallique étant un sel d'un métal, choisi parmi le magnésium, l'aluminium, le calcium et le baryum, dans laquelle le produit antirouille à base d'un sel métallique est une poudre fine dont le diamètre moyen des particules n'est pas supérieur à 1 µm.

2. Feuille métallique avec un revêtement anticorrosif comme défini dans la revendication 1, dans laquelle le substrat est une feuille en acier.

3. Feuille métallique avec un revêtement anticorrosif comme défini dans la revendication 1 ou 2, dans laquelle le film de revêtement a une épaisseur comprise dans la plage allant de 5 µm à 30 µm.

4. Feuille métallique avec un revêtement anticorrosif comme défini dans l'une quelconque des revendications 1 à 3, dans laquelle la poudre métallique de zinc a un diamètre moyen de particules compris dans la plage allant de 0,01 µm à 20 µm.

5. Feuille métallique avec un revêtement anticorrosif comme défini dans l'une quelconque des revendications 1 à 4, dans laquelle la peinture anticorrosive comprend la poudre métallique de zinc dans une quantité de 40 à 95 % en poids de ses composés solides.

6. Feuille métallique avec un revêtement anticorrosif comme défini dans l'une quelconque des revendications 1 à 5, dans laquelle la peinture anticorrosive comprend le produit antirouille à base d'un sel métallique dans une quantité de 1 à 30 % en poids de ses composés solides.

7. Feuille métallique avec un revêtement anticorrosif comme défini dans l'une quelconque des revendications 1 à 6, dans laquelle le produit antirouille à base d'un sel métallique est un phosphate.

8. Feuille métallique avec un revêtement anticorrosif comme défini dans l'une quelconque des revendications 1 à 6, dans laquelle le produit antirouille à base d'un sel métallique est un phosphomolybdate.

9. Feuille métallique avec un revêtement anticorrosif comme défini dans l'une quelconque des revendications 1 à 8, dans laquelle un film de revêtement en phosphate est intercalé entre la feuille métallique et le film de revêtement de la peinture anticorrosive.
